Europäisches Patentamt

**European Patent Office**

Office européen des brevets

(11) Veröffentlichungsnummer: **0 075 839**
**B1**

(12) **EUROPÄISCHE PATENTSCHRIFT**

(45) Veröffentlichungstag der Patentschrift:
**28.01.87**

(21) Anmeldenummer: **82108718.6**

(22) Anmeldetag: **21.09.82**

(51) Int. Cl.⁴: **F 21 V 19/04**

(54) **Elektrische Leuchte.**

(30) Priorität: **30.09.81 DE 3138849**

(43) Veröffentlichungstag der Anmeldung:
**06.04.83 Patentblatt 83/14**

(45) Bekanntmachung des Hinweises auf die Patenterteilung:
**28.01.87 Patentblatt 87/5**

(84) Benannte Vertragsstaaten:
**AT BE CH DE FR GB IT LI NL SE**

(56) Entgegenhaltungen:
**CH - A - 434 793**
**DE - A - 1 959 220**
**US - A - 1 902 026**

(73) Patentinhaber: **ROBERT BOSCH GMBH, Postfach 50,**
**D-7000 Stuttgart 1 (DE)**

(72) Erfinder: **Mayer-Staufenbiel, Torsten, Brucknerweg 4,**
**D-7257 Ditzingen (DE)**
Erfinder: **Reiser, Heinrich, Mozartstrasse 31,**
**D-7000 Stuttgart 1 (DE)**

## Beschreibung

Die Erfindung geht aus von einer Rundumkennleuchte nach der Gattung des Patentanspruches 1. Eine derartige Leuchte ist beispielsweise bekannt aus der DE-A-1 959 220. Rundumkennleuchten dieser Art werden insbesondere benutzt zur Kenntlichmachung bevorrechtigter Einsatzfahrzeuge der Polizei, der Feuerwehr usw., sie können jedoch auch im stationären Betrieb zur Absicherung von Gefahrenstellen verwendet werden. Zur Befestigung der Glühlampe ist bei dieser bekannten Anordnung eine feststehende zylindrische Buchse vorgesehen, in der die Lampe mittels eines Tellerflansches durch eine Überwurfmutter gehalten ist. Diese Anordnung hat einerseits den Nachteil, dass das Auswechseln der Glühlampe wegen der Schraubbefestigung relativ zeitaufwendig und mühsam ist; andererseits ist die Einhaltung einer definierten Einbaulage der Glühlampe nicht gewährleistet, weil die Halterung der Glühlampe entlang des Randes des Tellerflansches erfolgt und nicht im Bereich vorgegebener, definierter Auflagepunkte.

Weiterhin sind auf dem Markt Rundumkennleuchten bekannt mit einem bajonettverschlussartigen, die Glühlampe fixierenden Halteteil. Bei dieser bekannten Anordnung besteht die Lampenfassung aus einer Mehrzahl von losen Einzelteilen, was den Austausch der Glühlampe erheblich erschwert.

Weiterhin ist aus der US-A-1 902 026 eine elektrische Leuchte bekannt mit einem feststehenden Reflektor, in welchem eine in eine Lampenfassung eingeschraubte Glühlampe herausklappbar gehalten ist. Die Lampenfassung besitzt ein Isolierteil, welches in einer metallischen Halterung arretierbar ist. Diese bekannte Anordnung betrifft jedoch einen andersartigen Leuchtentyp, welcher nicht die hohen Anforderungen an Rundumkennleuchten hinsichtlich Justierbarkeit und Ausrichtung des abgestrahlten Lichtbündels zu erfüllen braucht. Auch die Anforderungen an die Betriebssicherheit dieser bekannten Leuchtenanordnungen entsprechen nicht denjenigen, welche an Kennleuchten gestellt werden, die zum rauhen Betrieb an Fahrzeugen bestimmt sind.

Die erfindungsgemässe Rundumkennleuchte mit den kennzeichnenden Merkmalen des Patentanspruchs 1 hat den Vorteil, dass ein einfacher Austausch der Glühlampe mit einer Hand möglich ist, wobei nicht mehr die Gefahr besteht, dass lose Teile verlorengehen oder beschädigt werden. Die vorschriftsmässige definierte Einbaulage wird mit einfachen konstruktiven Mitteln sichergestellt ohne Erschwerung der Handhabung. Weiterhin besteht nicht mehr die Gefahr einer elektrischen Beschädigung, beispielsweise der elektrischen Stromzuführung, beim Herausziehen der Glühlampe. Als besonders vorteilhaft hat sich hierbei die erfindungsgemässe Arretierung der Glühlampe einerseits in der Leuchtstellung und andererseits in der ausgeklappten Stellung erwiesen, in der der Austausch der Glühlampe sehr einfach und schnell möglich ist. Die beiden Endlagen werden dabei in konstruktiv besonders zweckmässigerweise durch eine V-förmige Langlochführung definiert, wobei die Arretierung durch zwei Führungs-Rippen am Isolierteil erfolgt in Verbindung mit einer Schraubenfeder, welche auslenkbar ist und in Richtung beider Schenkel der V-förmigen Führung das Isolierteil mit der Glühlampe in der Endlage festhält.

Vorteilhafte Ausgestaltungen der Erfindung sind in den abhängigen Ansprüchen und in der folgenden Beschreibung näher erläutert.

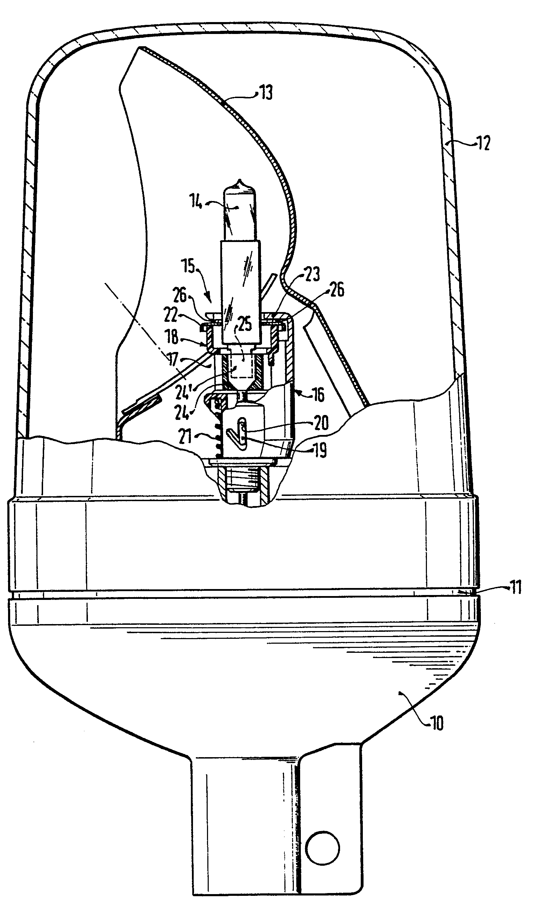

Ein Ausführungsbeispiel der Erfindung ist in der Zeichnung dargestellt und in der nachfolgenden Beschreibung näher erläutert. Die Figur zeigt einen Längsschnitt durch eine Rundumkennleuchte mit drehbarem Reflektor, welche zur Montage auf einem stabförmigen Träger bestimmt ist.

Die in der Figur teilweise im Schnitt, teilweise in der Ansicht dargestellte elektrische Leuchte besitzt einen Sockel 10, auf den unter Zwischenlage eines Dichtringes 11 eine Haube aus vorzugsweise blauem oder orangefarbenen Kunststoff aufgesetzt ist. Die gezeigte Leuchte ist im Handel unter dem Begriff Rundumkennleuchte bekannt und wird insbesondere zur Kennzeichnung bevorrechtigter Kraftfahrzeuge verwendet. Innerhalb der Haube 12 ist ortsfest eine Einfaden-Halogen-Glühlampe 14 in einer Lampenfassung 15 angeordnet. Die Glühlampe 14 ragt in den Reflektor 13 derart hinein, dass der Leuchtfaden etwa im Brennpunkt des parabolförmigen Reflektors liegt. Der Reflektor 13 ist durch einen nicht dargestellten Elektromotor um eine vertikale Achse drehbar, so dass ein rotierendes Lichtbündel von der Glühlampe 14 ausgeht.

Die Lampenfassung 15 ist im wesentlichen zweiteilig ausgebildet und besteht einerseits aus einem ortsfesten, seitlich offenen Gehäuse 16 und andererseits aus einem aus einer Öffnung 17 des Gehäuses 16 herauskippbaren Isolierteil 18, in dem die Glühlampe 14 elektrisch und mechanisch gehalten ist. Das Isolierteil 18 besitzt zwei diametral gegenüberliegende Rippen 19, welche in zwei zugehörige, V-förmig zusammenlaufende Langlochführungen 20 eingreifen zur Arretierung des Isolierteils 18 einerseits in der Leuchtstellung und andererseits in der ausgeklappten Stellung zum Austausch der Glühlampe 14. In der Figur ist die Leuchtstellung gezeigt, die ausgeklappte Stellung ist durch eine strichpunktierte Linie in Richtung des linken Schenkels der V-förmigen Langlochführung 20 angedeutet.

Zwischen dem Gehäuse 16 und dem Isolierteil 18 sitzt eine Schraubendruckfeder 21, welche sich einerseits am Boden des Gehäuses 16 und andererseits in einer Vertiefung des Isolierteils 18 abstützt. In der gezeichneten Leuchtstellung drückt die Schraubenfeder 21 das Isolierteil 18 und mit ihm einen Tellerflansch 22 an der Glühlampe 14 gegen die Innenseite der oberen Begrenzungswand 23 des Gehäuses 16. Die Schenkel der V-förmigen Langlochführung 20 sind unterschiedlich lang, so dass in der gezeichneten Leuchtstellung die Rippen 19 nicht in die Endlage der Langlochführung 20 gelangen. Im Gegensatz dazu liegen die Rippen 19 in der herausgekippten Stellung des Isolierteils 18 in der strichpunktiert angedeuteten Lage unter dem Druck der Schraubenfeder 21 am oberen Rand der linken Aussparung der Langlochführung 20 an, so dass sich auch im ausgekippten Zustand eine stabile Endlage ergibt. Das Isolierteil 18 ist zum Herausschwenken gemeinsam mit der Glühlampe 14 entgegen der Kraft der Schraubenfeder 21 in Richtung beider Schenkel der Führung 20 in dem Gehäuse 16 verschiebbar.

Innerhalb des Isolierteils 18 ist ein Steckhülsengehäuse 24 mit einer Steckhülse 24′ angeordnet zur elektrischen Kontaktierung eines Flachsteckers 25 an der Glühlampe 14. Das Steckhülsengehäuse 24 ist fliegend in dem Isolierteil 18 gelagert, seine Position ist durch den Flachstecker 25 festgelegt.

Das Gehäuse 16 besteht aus einem Druckgussteil und besitzt drei nasenartige Vorsprünge 26 an der Innenseite der oberen stirnseitigen Begrenzungswand 23. Durch die Dreipunktauflage 26 ist eine definierte Auflage des Tellerflansches 22 der Glühlampe 14 sichergestellt und somit auch eine einwandfreie Lage der nicht gezeigten Glühwendel der Glühlampe 14 gegenüber dem Reflektor 13, da bei der Fertigung der Glühlampen 14 die Lage der Glühwendel zu drei definierten Punkten am Tellerflansch 22 einjustiert wird.

Zum Wechseln der Glühlampe 14 wird von oben ein leichter Druck auf diese ausgeübt, entgegen dem Druck der Schraubenfeder 21. Hierdurch gelangt die Rippe 19 in der Langlochführung 20 ausser Eingriff mit dem vertikalen Abschnitt der Langlochführung, so dass die Glühlampe 14 zusammen mit dem Isolierteil 18 in die strichpunktierte Lage bewegt werden kann. Beim Loslassen der Glühlampe 14 drückt nun die Schraubenfeder 21 das Isolierteil 18 mit der Rippe 19 in den linken, kürzeren Schenkel der Langlochführung 20, bis die Rippe 19 am oberen Ende der Führung anliegt. In dieser Lage ist das Isolierteil 18 gegen Herausfallen und gegen Zugkräfte gesichert und mit diesem auch das Steckhülsengehäuse 24, so dass die Glühlampe 14 mit ihrem Flachstecker 25 aus der Steckhülse 24′ herausgezogen werden kann. Die Anordnung besitzt also keine losen Teile, welche beim Wechseln der Glühlampe verlorengehen oder beschädigt werden können. Auch eine elektrische Beschädigung der Anordnung ist praktisch ausgeschlossen, das das Zuleitungskabel mit der zugehörigen Flachsteckhülse 24′ fest in dem Steckhülsengehäuse 24 gehalten ist. Beim Eindrücken der neuen Glühlampe 14 liegen die Rippen 19 am unteren Ende der Langlochführung 20 an, so dass sich auch für diesen Arbeitsgang eine feste Endlage der beweglichen Teile der Anordnung ergibt.

## Patentansprüche

1. Rundumkennleuchte, insbesondere für Kraftfahrzeuge, mit einem innerhalb einer feststehenden Haube aus Kunststoff von einem Elektromotor um eine vertikale Achse drehbaren Reflektor und mit einer Glühlampe, insbesondere einer Einfaden-Halogen-Glühlampe, welche in einer Lampenfassung lösbar befestigt ist, dadurch gekennzeichnet, dass die Lampenfassung im wesentlichen aus einem ortsfesten, seitlich offenen Gehäuse (16) und einem aus der Öffnung (17) des Gehäuses (16) herauskippbaren Isolierteil (18) besteht, welches zusammen mit einer Glühlampe (14) gegenüber dem Gehäuse (16) und gegenüber dem Reflektor (13) schwenkbar gehalten ist, wobei das Isolierteil (18) mit zwei diametral gegenüberliegenden Rippen (19) in zwei zugehörigen V-förmigen Langlochführungen (20) im Gehäuse (16) entgegen der Kraft einer Schraubenfeder (21) verschiebbar ist zur Arretierung einerseits in der Leuchtstellung und andererseits in der ausgeklappten Stellung zum Austausch der Glühlampe (14).

2. Leuchte nach Anspruch 1, dadurch gekennzeichnet, dass in dem Isolierteil (18) ein Steckhülsengehäuse (24) mit einer Flachsteckerhülse (24′) fliegend gelagert ist.

3. Leuchte nach Anspruch 1 oder 2, dadurch gekennzeichnet, dass das seitlich offene Gehäuse (16) ein Druckgussteil ist mit drei nasenartigen Vorsprüngen (26) an der Innenseite einer stirnseitigen Auflage für einen Tellerflansch (22) an der Glühlampe (14).

## Claims

1. Warning beacon, especially for motor vehicles, with a reflector rotatable about a verticle axis by an electric motor within a fixed plastic hood, and with an incandescent lamp, especially a single-filament halogen incandescent lamp, which is fastened releasably in a lamp holder, characterized in that the lamp holder consists essentially of a fixed laterally open housing (16) and of an insulating part (18) which can be swung out from the orifice (17) in the housing (16) and which, together with an incandescent lamp (14), is held so as to be pivotable relative to the housing (16) and relative to the reflector (13), and the insulating part (18) can be shifted, by means of two ribs (19) located diametrically opposite one another, counter to the force of a helical spring (21) in two associated V-shaped slot guides (20) in the housing (16), for locking on the one hand in the lighting position and on the other hand in the swung-out position for exchanging the incandescent lamp (14).

2. Beacon according to Claim 1, characterized in that a plug-socket housing (24) with a flat-plug socket (24′) is mounted overhung in the insulating part (18).

3. Beacon according to Claim 1 or 2, characterized in that the laterally open housing (16) is a die-casting with three nose-like projections (26) on the inside of an end-face support for a disc flange (22) against the incandescent lamp (14).

**Revendications**

1. Feu tournant, en particulier pour véhicules, comportant un réflecteur qu'un moteur électrique peut faire tourner autour d'un axe vertical à l'intérieur d'un capot fixe en plastique et comportant une ampoule, en particulier une ampoule à halogène monofilament qui est fixée, de façon amovible, dans une monture d'ampoule, caractérisé en ce que la monture d'ampoule est essentiellement constituée d'un carter fixe, ouvert latéralement (16) et d'une pièce isolante (18) qui peut basculer hors de l'ouverture (17) du carter (16) et qui, en même temps qu'une ampoule (14), est maintenue, avec possibilité de pivotement à l'égard du carter (7) et à l'égard du réflecteur (13), étant précisé que la pièce isolante (18), qui comporte deux nervures (19) diamétralement opposées dans deux lumières de guidage (20) correspondantes en forme de V du carter (16) peut coulisser en s'opposant à la force d'un ressort spirale (21) pour se bloquer d'une part en position d'éclairage et d'autre part en position rabattue pour permettre l'échange de l'ampoule (14).

2. Feu selon la revendication 1, caractérisé en ce qu'un carter de douille (24) avec une douille pour fiche plate (24') est portée, flottante, dans la pièce isolante (18).

3. Feu selon la revendication 1 ou 2, caractérisé en ce que le carter (16) ouvert latéralement est une pièce moulée sous pression comportant trois saillies en forme de talon (26) sur la face intérieure d'une surface d'appui frontale pour un flasque d'appui (22) prévu sur l'ampoule (14).